**Europäisches Patentamt**

**European Patent Office**

**Office européen des brevets**

(19)

(11) Veröffentlichungsnummer : **0 340 380 B1**

(12)

# EUROPÄISCHE PATENTSCHRIFT

(45) Veröffentlichungstag der Patentschrift :
**27.05.92 Patentblatt 92/22**

(51) Int. Cl.$^5$ : **B65G 19/06**, // B65G53/48

(21) Anmeldenummer : **89100655.3**

(22) Anmeldetag : **16.01.89**

(54) **Trogketten-Steilförderer für mässig trockenes Schüttgut.**

(30) Priorität : **03.05.88 DE 3814970**

(43) Veröffentlichungstag der Anmeldung :
**08.11.89 Patentblatt 89/45**

(45) Bekanntmachung des Hinweises auf die
Patenterteilung :
**27.05.92 Patentblatt 92/22**

(84) Benannte Vertragsstaaten :
**AT BE CH DE ES FR GB IT LI NL**

(56) Entgegenhaltungen :
**AT-B- 327 787**
**AU-B- 490 634**
**DD-A- 233 987**
**DD-A- 236 908**
**FR-A- 2 245 555**

(73) Patentinhaber : **PASSAVANT-WERKE AG**
**W-6209 Aarbergen 7 (DE)**

(72) Erfinder : **Busse, Oswald, Dr.-Ing.**
**Schillerstrasse 8**
**W-6209 Aarbergen 2 (DE)**

EP 0 340 380 B1

## Beschreibung

Die Erfindung bezieht sich auf einen Trogketten-Steilförderer für mäßig trockenes Schüttgut wie z.B. Filterkuchenbruch.

Die Förderung von Filterkuchen aus dem Auffangtrichter unter der Filterpresse in ein Silo oder einen Verbrennungsofen macht eine Höhenförderung von bis zu 20 m erforderlich. Es werden hierfür vorzugsweise Trogkettenförderer verwendet,die aus drei Abschnitten bestehen: einem horizontalen Aufgabebereich, einem mittleren Steilförderbereich und einem oberen horizontalen Abwurfbereich (DE-A 22 00 130). Es ist bekannt. daß die Umlenkstationen zwischen den Abschnitten einem starken Verschleiß unterliegen. An den Umlenkbögen der Fördertrume angebrachte Stützrollen haben den Verschleiß nur unwesentlich verringern können. Man könnte den Verschleiß zwar etwas vermindern, wenn man die Steigung des mittleren Aufwärts-Förderabschnitts reduzierte. Dies wird aber durch eine Erhöhung der Investitionskosten und einen größeren Platzbedarf erkauft. Ein weiterer Nachteil des bekannten Trogkettenförderers ist darin zu sehen. daß das Fördergut in dem mittleren Steilförderabschnitt häufig zurückfällt und eine Schüttgutwalze bildet. so daß die Übergabe an den oberen Abschnitt behindert und mitunter sogar ganz verhindert wird.

Aus der FR-A 22 45 555 ist ein Silo-Entnahmegerät bekannt, das neben mehreren in das Silogut greifenden Frässchnecken einen im wesentlichen horizontal zu einem Trogketten-Förderer seitlich hinarbeitenden Zwangsförderer enthält. Der Troskettenförderer ist geradlinig ansteigend ausgebildet: sein Obertrum ist offen. Auch diese Einrichtung löst nicht die Aufgabe. mäßig feuchtes stückiges Schüttgut einwandfrei hochzufördern. Stellt man den Trogkettenförderer steiler, dann kommt es ebenfalls wieder zu dem Zurückfallen des Fördergutes. Die zum Silo hin offene Förderschraube ist ebenfalls nicht geeignet, das Schüttgut dem Steilförderer in ausreichender Menge zuzuführen.

Die Aufgabe. die eingangs geschilderten Nachteile zu vermeiden wird erfindungsgemäß dadurch gelöst, daß der als voll ummantelte Fördereinrichtung ausgebildete Zwangsförderer im wesentlichen in einer lotrecht zu den Achsen der Umlenkräder der Ketten Stehenden Ebene auf das steil verlaufende und im Hochförderabschnitt im wesentlichen gekapselte Obertrum des Trogketten-Förderers mündet. Mit der Verwendung eines derartig in das Obertrum arbeitenden Zwangsförderers wird nun auch das Problem gelöst, das dadurch entstanden ist, daß im Obertrum des steilen Trogkettenförderers das Schüttgut häufig wieder zurückfällt. Jetzt wird das Schüttgut aktiv in den Förderstrang des Trogkettenförderers geschoben. Ein Zurückfallen ist dann aufgrund der engen Umhausung und Vollfüllung nicht mehr möglich.

Vorzugsweise ist die horizontale Zwangsfördereinrichtung als Förderschraube, insbesondere als sog. Schubschraube ausgebildet. Die Schraube selber wird am Abgabeende fliegend gelagert, so daß sie sich flexibel den Belastungen durch das Fördergut anpassen kann.

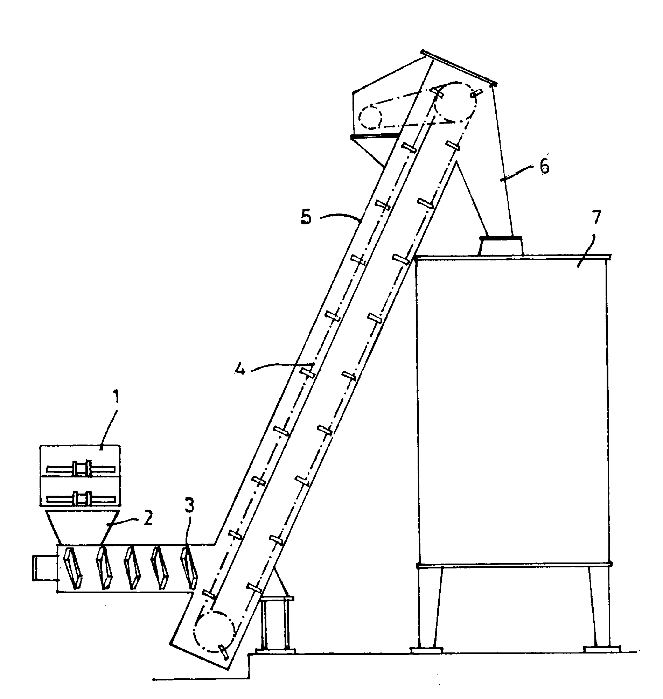

Die Abbildung zeigt einen erfindungsgemäßen Trogketten-Steilförderer schematisch in der Seitenansicht. Mit 1 ist der Querförderer bezeichnet, der den Filterkuchenbruch aus dem Filterkuchenbunker unter der Filterpresse abtransportiert. Der Abwurf erfolgt in den Aufgabetrichter 2 der horizontalen Schubschraube 3, die ihrerseits über dem Obertrum 4 des steilstehenden Trogketten-Förderers 5 mündet. Die Abwurfschurre 6 leitet das Schüttgut sicher in den Kuchensilo 7.

## Patentansprüche

1. Trogketten-Steilförderer für mäßig trockenes Schüttgut, z.B. Filterkuchenbruch, mit einem das Schüttgut dem unteren Bereich des Obertrums des Trogketten-Förderers aufgebenden, im wesentlichen horizontalen Zwangsförderer, wobei der Trogkettenförderer (5) ohne mittlere Umlenkstationen geradlinig ansteigend angeordnet ist,
**dadurch gekennzeichnet**, daß der als voll ummantelte Fördereinrichtung ausgebildete Zwangsförderer (3) im wesentlichen in einer letrecht in den Achsen der Umlenkräder der Ketten Stehenden Ebene auf das steil verlaufende und im Hochförderabschnitt im wesentlichen gekapselte Obertrum des Trogketten-Förderers (5) mündet.

2. Trogketten-Steilförderer nach Anspruch 1, **dadurch gekennzeichnet**, das der horizontale Zwangsförderer als im wesentlichen vollständig gekapstele Förderschraube (3) mit Aufgabetrichter (2) ausgebildet ist.

3. Trogketten-Steilförderer nach Anspruch 2, **dadurch gekennzeichnet**, daß die Förderschraube (3) am Abförderende fliegend gelagert ist.

## Claims

1. Steep-angle drag chain conveyor for mostly dry bulk material, e.g. filter cake pieces, including a mostly horizontal forced conveying system feeding the bulk material onto the lower part of the drag chain conveyor carrying run, the steep-angle drag chain conveyor (5) being inclined at a straight line without intermediate deflecting stations,

**characterized in that** the forced conveying system (3) being built as completely enclosed conveyor is discharging at a flat surface positioned mostly vertically to the axes of the chain sprocket wheels onto the steep and at the upper transport section mostly encased drag chain conveyor (5) carrying run.

2. Steep-angle drag chain conveyor according to claim 1, **characterized in that** the horizontal forced conveying system is executed mostly as a fully enclosed conveyor screw (3) with feed hopper (2).

3. Stepp-angle drag chain conveyor according to claim 2, **characterized in that** the conveyor screw (3) is taper bore mounted at the delivery end.

## Revendications

1. Transporteur en masse incliné pour produit en vrac plus ou moins sec, p.ex. gâteaux de filtre-presse en morceaux, équipé d'une installation de transport forcé, principalement horizontale, alimentant le produit en vrac dans la zone inférieure du brin supérieur du transporteur en masse, le transporteur en masse (5) en étant arrangé de manière remontant d'une ligne droite sans stations de changement de direction intermédiaire,

**caractérisé en ce** que l'installation de transport forcé (3) exécutée comme transporteur muni d'un revêtement entier, débouche sur un plan plus ou moins vertical aux axes des poulies de renvoi des chaînes, dans le brin supérieur du transporteur en masse (5), capsulé en majeure partie du parcours de transport supérieur de montée raide.

2. Transporteur en masse incliné selon revendication 1, **caractérisé en ce** que l'installation de transport forcé est exécutée comme hélice transporteuse (3) étant en majeure partie capsulée et munie d'une trémie d'alimentation (2).

3. Transporteur en masse incliné selon revendication 2, **caractérisé en ce** que l'hélice transporteuse (3) est logée en porte-à-faux à son extrémité du décharge.